(19) Europäisches Patentamt

European Patent Office

Office européen des brevets

(11) **EP 1 411 469 A2**

(12) **EUROPEAN PATENT APPLICATION**

(43) Date of publication:
**21.04.2004 Bulletin 2004/17**

(51) Int Cl.$^7$: **G06T 5/00**, G06T 7/00

(21) Application number: **03078104.1**

(22) Date of filing: **30.09.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **19.10.2002 GB 0224357**

(71) Applicant: **EASTMAN KODAK COMPANY
Rochester, New York 14650 (US)**

(72) Inventor: **Murphy, Nicholas P.
Harrow Middlesex HA1 4TY (GB)**

(74) Representative: **Barker, Brenda et al
Kodak Limited,
Patents Departement,(W92-3A),
Headstone Drive
Harrow, Middlesex HA1 4TY (GB)**

(54) **Quantifying the sharpness of a digital image**

(57)    The invention provides a method of quantifying the sharpness of a digital image. The method comprises the steps of identifying a plurality of edges in a digital image; and, calculating an image sharpness metric value representative of the sharpness of the digital image based on the identified edges. Using this method it is possible to control the sharpness of an image. This is achieved by quantifying the sharpness of the image in accordance with the method of the present invention, to provide an image sharpness metric value representative of the image sharpness. The gain of an unsharp-mask filter (or other suitable sharpening algorithm) is then adjusted in dependence on a calibrated relationship between gain of the unsharp mask filter (or more generally aggressiveness of digital sharpening algorithm) and the image sharpness metric value.

EP 1 411 469 A2

**Description**

**FIELD OF THE INVENTION**

The present invention relates to digital image processing and in particular to a method of quantifying the sharpness of a digital image. The invention also relates to a method of controlling the sharpness of a digital image.

**BACKGROUND OF THE INVENTION**

The sharpness of a digital image may be determined by, amongst other factors, the capture device with which it was captured. Once captured, the quality of an image, as perceived by a viewer, can be enhanced by the appropriate use of a sharpening filter. However, the default use of sharpening e.g. within a printer, to compensate for more than the printer modulation transfer function can lead to over-sharpened output images, particularly if the source has been pre-sharpened. In the case of images captured with a digital camera, in-built algorithms within the camera often function to pre-sharpen the captured image, leading to the output of over-sharpened images from the printer. This is undesirable since the over-sharpening of images can distort true image data and lead to the introduction of artefacts into the image.

A method and system is desired to enable the sharpness of an image to be quantified, thus enabling suitable amounts of sharpening to be applied, as required.

**SUMMARY OF THE INVENTION**

According to the present invention, there is provided a method of quantifying the sharpness of a digital image. The method comprises the step of identifying a plurality of edges within a digital image. Next, an image sharpness metric value, representative of the sharpness of the digital image, is calculated based on the identified edges. Preferably, the method further comprises determining an aggregate edge profile representative of said image in dependence on the identified edges and calculating the image sharpness metric value based on the determined aggregate edge profile.

Preferably, the step of identifying a plurality of edges is performed using an edge detection operator on a low-resolution version of the digital image. Examples of suitable edge detection operators include, amongst others, a Sobel edge detector, a Canny edge detector and a Prewitt edge detector.

Preferably, prior to the operation of the edge detection operator, the image is split up into a number of regions, and a threshold value for an edge is set for each region. In other words a value representative of the overall noise level within the region is selected to enable edges to be detected. In one example, the threshold value for each region is set equal to the RMS value within the respective region.

In a preferred example, once the edges have been detected in the low-resolution version of the image, the positions of the identified edges detected in the low-resolution image are interpolated to identify corresponding edges in a full-resolution version of the image.

This enables the extraction of edge profiles from the full-resolution version of the image corresponding to the edges detected in the low resolution image. Preferably, the method then comprises the steps of testing the extracted edge profiles for compliance with one or more criteria and rejecting them if they do not satisfy the selected one or more criteria.

The one or more criteria may include whether or not the profile neighbourhood is within defined numeric limits, whether or not the profile includes any large negative slopes and whether or not the profile is within a predetermined range on at least one side of the edge. Other suitable selection criteria may be used in addition to or instead of any or all of those listed above.

The method then comprises the step of storing all the extracted edge profiles that satisfy the one or more criteria and determining an aggregate edge profile for the image in dependence on the stored edge profiles. The aggregate edge profile may be determined by taking the median of the stored edge profiles. Alternatively any other means of selection or processing may be used to determine the aggregate edge profile for the image based on the stored edge profiles. For example, the sharpness metric value of each stored edge profile can be measured and then histogrammed to determine the range of sharpness within the image. Using the histogram, stored edge profiles with sharpness metric values in the upper dectile can be selected to form the aggregate edge profile.

The image sharpness metric value, which in one example is calculated based on the determined aggregate edge profile, is defined as follows:

$$\text{Sharpness metric value} = \tfrac{1}{N} \sum_{k=1}^{N} (x_{c-1+k} - x_{c-k})W_k$$

in which **N** is a number of gradient values to measure;

*c* is a co-ordinate representing the centre of the aggregate edge profile;

*k* is the edge profile sample offset i.e. the distance between the centre of the edge profile and the position defining the points of intersection of the edge profile and the line with a specified gradient passing through the edge profile at *c*;

$x_k$ is the profile sample value at a position defined by *k*; and,

$W_k$ is a weighting vector which gives greater significance to the gradient measurements the closer they are made to the centre of the aggregate edge profile i.e. the smaller *k* is.

It may be preferable to normalise the extracted edge profiles prior to storing or alternatively, normalise the aggregate edge profile prior to calculation of the image sharpness metric value.

It may be preferable to calculate a sharpness metric value based on individually extracted edge profiles and then determine an image sharpness metric value in dependence on these calculated sharpness metric values.

The invention also provides a method of controlling the sharpness of an image. The method of controlling the sharpness comprises the steps of quantifying the sharpness of the image in accordance with the method of the present invention to obtain an image sharpness metric value and adjusting the aggressiveness of a digital sharpening algorithm e.g. gain of an unsharp-mask filter, in dependence on a calibrated relationship between the aggressiveness of the digital sharpening algorithm and the image sharpness metric value.

Preferably, the calibrated relationship between the aggressiveness of a digital sharpening algorithm and the image sharpness metric value is generated by:

(a) filtering each image in a training set of images using the digital sharpening algorithm across a range of values for aggressiveness of the digital sharpening algorithm;

(b) for each value of aggressiveness for each of the images in the training set, quantifying the sharpness of the sharpened image in accordance with the method of the present invention; and,

(c) determining the relationship between the aggressiveness of the digital sharpening algorithm and the image sharpness metric value in dependence on results of step (b).

According to a second aspect of the present invention, there is provided a processor adapted to receive as an input a digital image and provide as an output a value representative of the image sharpness i.e. the image sharpness metric value. The processor is adapted to execute the method steps of the first aspect of the present invention. The processor may be the CPU of a computer, the computer having software to control the execution of the method.

**ADVANTAGEOUS EFFECT OF THE INVENTION**

The invention provides a robust method for quantifying the sharpness of an image, providing an image sharpness metric value representative of the sharpness of the image. In one example of the present invention, this may be used to calculate a required adjustment to an image's unsharp-mask gain. This therefore enables suitable amounts of sharpening to be applied to the image. The problem of over-sharpening of images due to default sharpening in printers or other output devices is therefore overcome.

**BRIEF DESCRIPTION OF THE DRAWINGS**

Examples of the present invention will now be described in detail with reference to the accompanying drawings, in which:

Figure 1 is a flow diagram showing the basic steps in the method of the present invention;
Figure 2 shows a schematic block diagram of the steps required to identify analysis blocks within an image in accordance with the method of the present invention;
Figure 3 is an example of a low-resolution image used in the method of the present invention;
Figure 4 shows a resulting edge map after the operation of an edge detector on the image in Figure 3;
Figure 5 is an example of a full-resolution image used in the method of the present invention;
Figure 6 is a flow diagram showing the steps used in edge profile selection in the method of the present invention;
Figure 7 shows an example of an edge profile extracted from an analysis block within a full-resolution image;
Figure 8 shows the composite of edge profiles selected from an image;

Figure 9 shows an aggregate edge profile calculated based on the composite of edge profiles shown in Figure 8;

Figure 10 is a graph used in the calculation of a sharpness metric for an image according to the method of the present invention; and,

Figures 11 to 13 are examples of graphs showing the variation of the image sharpness metric value with unsharp mask gain for each of a number of different digital images.

## DETAILED DESCRIPTION OF THE INVENTION

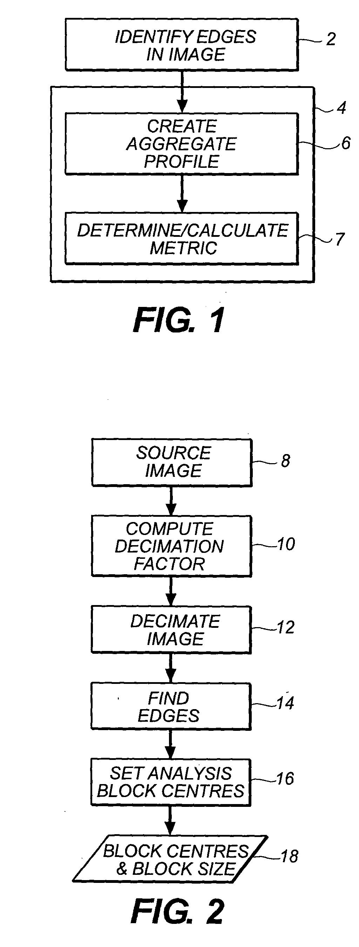

Figure 1 is a flow diagram showing the steps in the method of the present invention. Initially, at step 2, edges within a digital image are identified. Next in step 4, an image sharpness metric value is determined, or calculated, to quantify the sharpness of the image, the image sharpness metric value being calculated based on information obtained from the identified edges. In the example shown in Figure 1, step 4 may be subdivided into a step 6 in which an aggregate edge profile is created in dependence on the identified edges, and a step 7 in which, based on the created aggregate edge profile, the image sharpness metric value is calculated to quantify the sharpness of the image. As will be explained below, the calculated metric value serves to enable decisions to be made regarding further sharpening or blurring of the image.

To prepare the image so that it is possible to identify, or extract, edge profiles, in a preferred example of the present invention, as a first step analysis blocks within the image are identified. Figure 2 shows a schematic block diagram of the steps required to identify analysis blocks within an image. At step 8 the source image is input to the process. At step 10, a decimation factor is computed. In other words, the source image is averaged down to a size with a minimum side length of not less than 128 pixels. A simple averager may be used as the anti-aliasing filter to remove high frequency components from the image. At step 12, the image is then decimated with the decimation factor computed in step 10, after which, at step 14, edges within the decimated image are sought. This may be done using any edge detector, one suitable example being a Sobel edge detector. Other examples include Prewitt or Canny edge detectors.

Threshold values used by the edge detector to determine whether or not a particular pixel represents an edge, may be determined based on the RMS value within a local neighbourhood, or region, of the pixel in question. All pixels in the low-resolution image are tested and the resulting edge-map is thinned to produce single thickness lines. Performing the edge detection on a low-resolution version of the image is advantageous since it is computationally efficient. It would also be possible to perform the edge detection on a high-resolution version of the image.

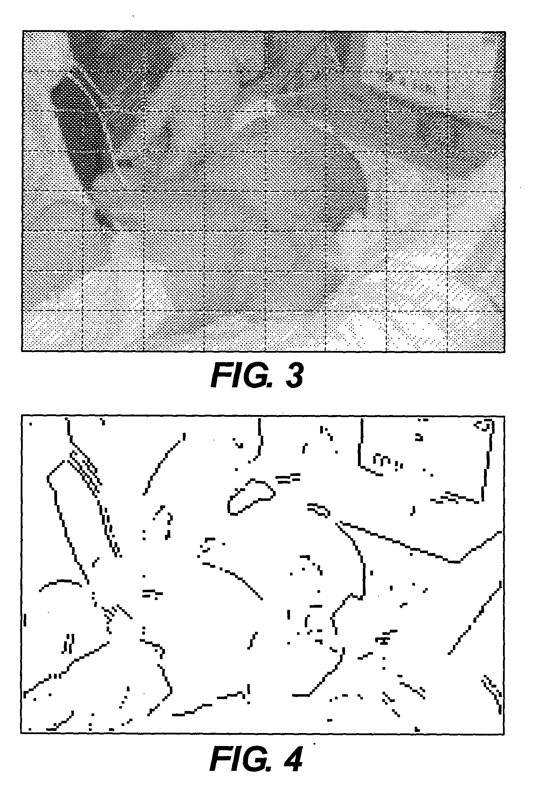

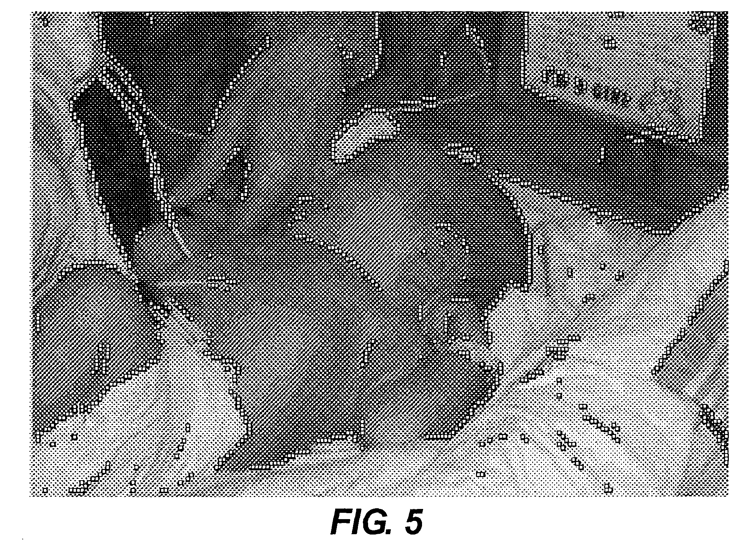

At step 16, the positions of the edges in the low-resolution version of the image are interpolated to form the centres of analysis blocks on the full resolution image. Figure 3 shows an example of a low-resolution image which has been decimated and then subdivided by an 8x8 grid. Figure 4 shows the resulting edge map after the operation of an edge detector on the image in Figure 3. As explained above with reference to step 16 in Figure 2, once the edge map has been identified on the low-resolution image, it is thinned and interpolated to form the centres of analysis blocks on the full resolution image, as shown in Figure 5.

It is possible that due to the interpolation of the edge map, the position of the analysis blocks on the full-resolution image will not correspond exactly to the position of the detected edges. If it is detected that the position of an analysis block does not correspond to that of an edge, a comparison is made between the edge map obtained from the low-resolution image and the high-resolution image. This enables the position of the analysis block to be moved slightly until the edge to which it corresponds is within its boundaries.

Once all the analysis blocks have been arranged in position as shown in Figure 5, a further edge detection is performed on the analysis blocks to determine the direction of the edge or edges within each analysis block. The position e.g. in terms of XY co-ordinates within the image, and gradient direction of the edges are stored in an associated memory. This information is used to extract edge profiles with the appropriate orientation, from each analysis block. The profiles collected from all the analysis blocks are used to determine an aggregate edge profile for the entire image. To ensure that potentially outlying data is not used in the determination of the aggregate edge profile, each of the profiles is tested against a number of conditions, or criteria, and rejected if these are not satisfied. There are many possible suitable methods that may be used to determine the aggregate edge profile based on the profiles collected from all the analysis blocks. For example, the aggregate edge profile may be determined based on the median of the stored edge profiles. Alternatively, a weighted sum or a mean of the edge profiles may be used. It will be appreciated that any suitable method of determining an aggregate edge profile may be used.

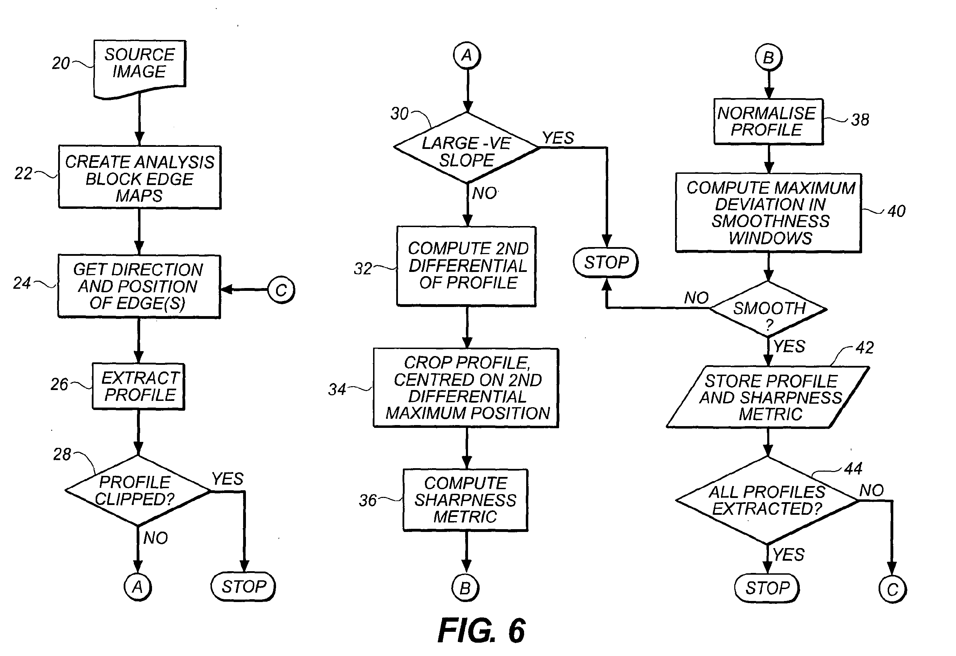

Figure 6 shows a flow diagram of the steps in the method of profile selection from the analysis blocks. Initially, at step 20 a source image is received and then at step 22, as explained above with reference to step 16 in Figure 2, a analysis block edge map is created. At step 24, the position i.e. XY co-ordinates within the image, and direction of edges within each block are identified to enable extraction of the edge profile(s) at step 26

Extraction of the edge profiles is achieved by determining sampling coordinate positions within the original image. The sampling co-ordinate positions are selected such that they are co-linear and the line connecting the sampling co-ordinate positions is parallel to the gradient direction of the edge. Finally, the sample values of the edge profile are determined by using bilinear interpolation at the sampling coordinate positions. Preferred number or size of edge profile is dependent on the image resolution and required output print size. Essentially, each edge profile is a one dimensional trace through an image, orientated across an image edge.

The edge profiles are extracted and at step 28 it is determined whether or not each of the extracted profiles is clipped i.e. if it contains pixel values beyond the dynamic range of the capture device with which the image was captured. If it is, the method proceeds to identify the next profile and the clipped profile is discarded. If it is determined that the profile is not clipped, further criteria are tested for. These include at step 30 a test as to whether or not the profile has a large negative slope e.g. a negative slope greater than 50% of the profile's dynamic range, as this would indicate that the edge is not a step edge. If it does have a large negative slope, the profile is discarded. If it does not have a large negative profile, at steps 32 and 34, the position of the maximum of the second differential is computed and the profile is centred from this point. In this example, at step 36, a sharpness metric value is calculated as will be described in detail below.

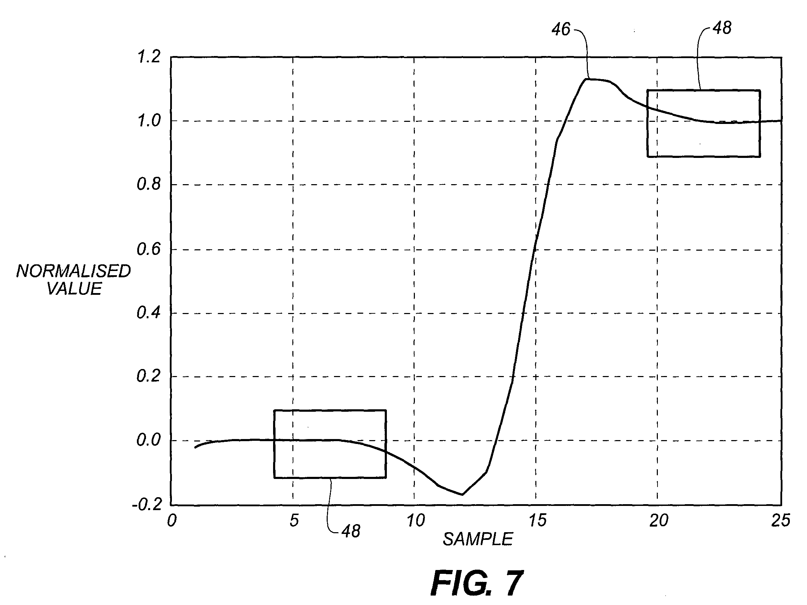

At step 38, the profile is normalised and at step 40 maximum deviations in smoothness windows are computed. The smoothness windows are typically defined regions either side of the profile as shown in Figure 7. If it is determined that the profile is sufficiently smooth within the smoothness windows, at step 42 the profile and calculated metric value is stored. If however it is determined that the profile is not sufficiently smooth within the smoothness windows, the profile and metric value are discarded. Finally, at step 44, if all profiles have been extracted the method is complete whereas if there are further profiles to extract the method returns to step 24 to obtain the direction and position of the next edge or edges to be processed.

As explained above, there are a number of criteria used to decide whether or not a specific edge profile is to be used in the determination of the sharpness metric value for the image. For example, the edge profile neighbourhood must not reach certain numeric limits as this indicates possible clipping. There must be no large negative slopes and in addition the edge profile must be smooth in the sample ranges to the left and right of the position of the main gradient within the edge profile. These ranges are separated from the main gradient by a small window to allow for overshoots. If the profile satisfies the conditions and is therefore accepted, it is stored along with an un-normalised sharpness metric value (to be explained below) for the profile. Additional criteria may also be used to make a decision as to whether or not a particular edge profile is to be used or not.

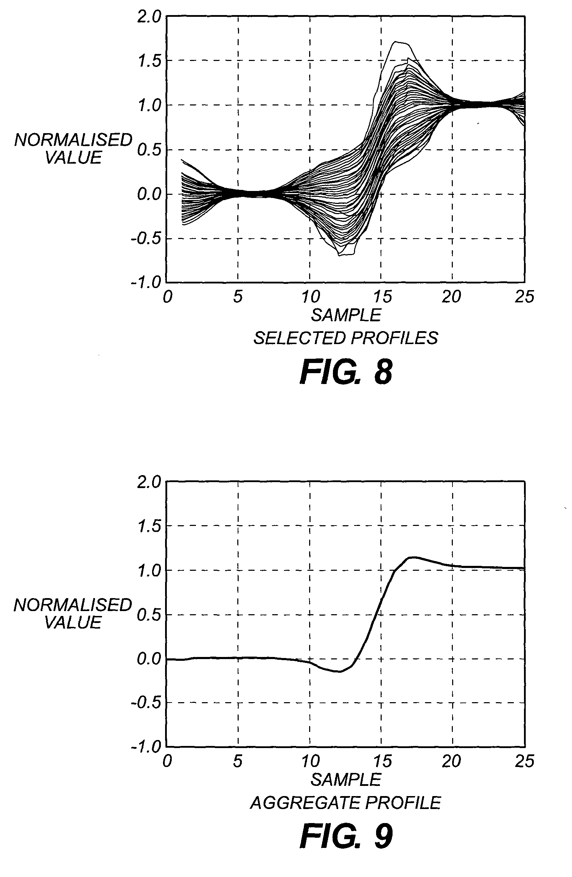

Figure 7 shows an example of an edge profile 46 extracted from an analysis block within the full-resolution image. Sample ranges (or smoothness windows) 48, are defined on either side of the profile 46. If it is determined that the edge profile extends either above or below these sample ranges 48 then the profile is discarded. Once a profile has been selected and stored for each of the analysis blocks, they are sample shifted so that the maximum gradient positions are coincident as shown in Figure 8. The image's representative aggregate edge profile, shown in Figure 9, is finally formed by performing a point-wise median across the set of profiles and then re-normalising. Alternative methods of forming the aggregate edge profile based on the collected plurality of profiles, shown in Figure 8, may also be used. For example, the aggregate could be selected based on dectiles of a sharpness metric value histogram or a different average may be taken from the plurality of profiles.

Finally, an image sharpness metric value is calculated based on the aggregate edge profile, to quantify the sharpness of the image. The image sharpness metric value is defined as follows:

$$\text{Sharpness metric value} = \frac{1}{N}\sum_{k=1}^{N}(x_{c-1+k} - x_{c-k})W_k$$

in which $N$ is the number of gradients values to measure;
$c$ is a co-ordinate representing the centre of the aggregate edge profile;
$k$ is the profile sample offset;
$x_k$ is the profile sample value at a position defined by $k$;
and, $W_k$ is a weighting vector which gives greater significance to the gradient measurements the closer they are made to the centre of the aggregate edge profile.

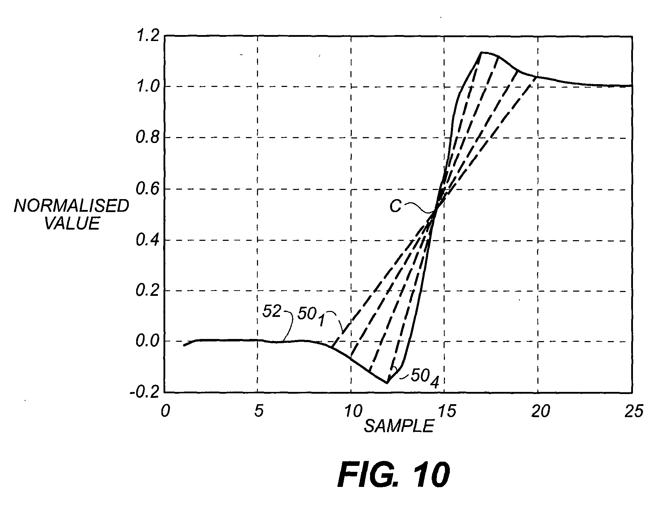

The image sharpness metric value is designed to enable distinction to be made between blurred and sharpened edges. Figure 10 shows schematically how the image sharpness metric value is calculated based on an aggregate edge profile 52 obtained from an image. As explained above, c is a co-ordinate representing the centre of the aggregate edge profile 52. The aggregate edge profile is positioned in the centre of a sample distance of e.g. 25 units, marked along the x-axis in Figure 10. The gradient of each of a number of lines $50_1$ to $50_6$, all of which pass through the centre c of the edge profile 52, is measured. The gradient of each of the lines $50_1$ to $50_6$ is denoted in the equation above as the difference between the normalised value of the aggregate edge profile at the two points other than c that each of

the lines $50_1$ to $50_6$ crosses the aggregate edge profile 52. The sharper the edge profile, the greater the measured gradient values will be and hence the weighted sum of these gradients will be larger than for a blurred edge profile.

$W_k$ is a weighting vector which gives greater significance in the sum to the gradient measurements the closer they are made to the centre of the aggregate edge profile i.e. the smaller $k$ is.

The equation for calculating the image sharpness metric value can be used in a number of different ways. Three examples follow. Firstly, as explained above the image sharpness metric value can be calculated based on a single aggregate edge profile for an image. Secondly, an image sharpness metric value can be calculated as the mean of the sharpness metric values calculated from individually selected normalised edge profiles. In other words, a sharpness metric value is calculated (according to the method described above) for each of the normalised edge profiles obtained from an image and then a mean of the sharpness metric values is determined. Thirdly, like the second method a mean of the sharpness metric values is used except in this case the mean is based on sharpness metric values obtained from un-normalised profiles.

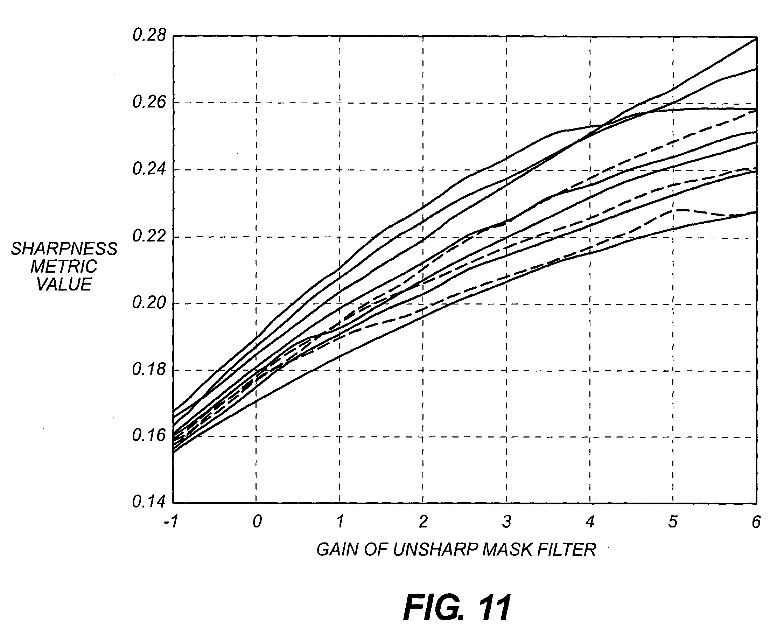

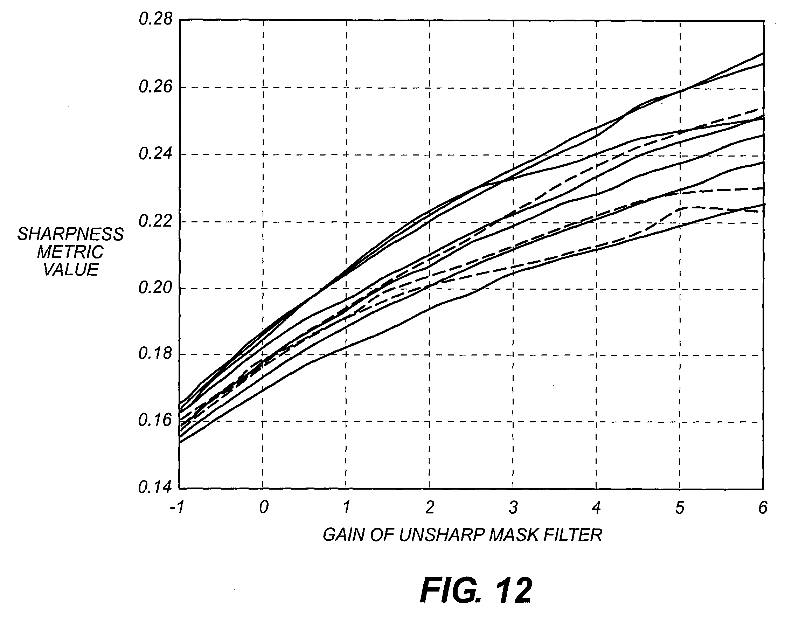

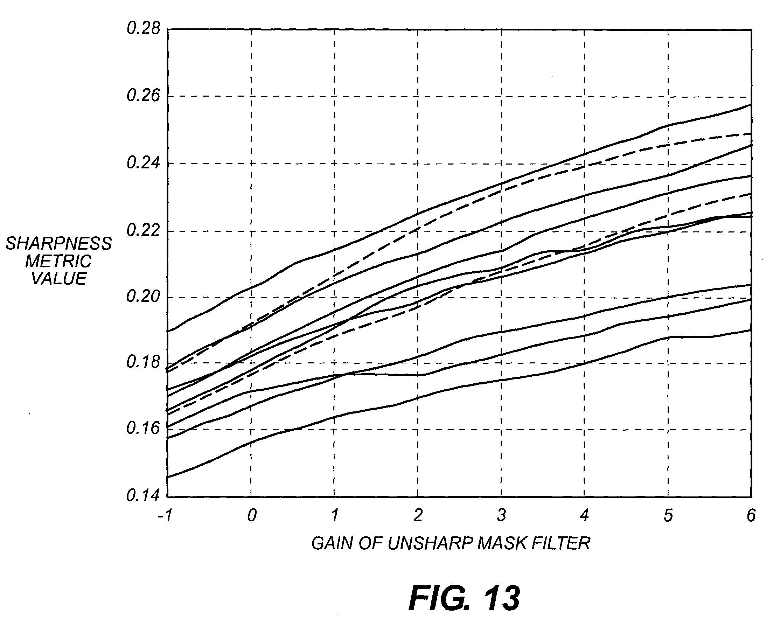

Figures 11 to 13 are graphs showing the variation of the sharpness metric value with the gain of an unsharp mask filter (unsharp mask gain) applied to each of a number of different digital images (a set of training images). In Figure 11, the relationship is shown between unsharp mask gain and the sharpness metric value calculated from a single aggregate profile for the image. In Figure 12, the relationship is shown between unsharp mask gain and the sharpness metric value calculated as the mean of sharpness metric values obtained from individually selected normalised edge profiles. In Figure 13, the relationship is shown between unsharp mask gain and the sharpness metric value calculated as the mean of sharpness metric values obtained from individually selected un-normalised edge profiles.

It can be seen in each of the relationships shown in Figures 11 to 13, that there is a correlation between the unsharp mask gain of an image with the calculated sharpness of the image as determined in accordance with the method of the present invention. Therefore by quantifying the sharpness of an image in accordance with the method of the present invention i.e. calculating a value for the sharpness metric for the image, it is possible to calculate a required change in the unsharp mask gain to bring the image sharpness metric value of an image to a desired value. It will be appreciated that a relationship can be established between the sharpness metric value and any suitable measure of the aggressiveness of a digital sharpening algorithm.

From the sets of lines in each of Figures 11 to 13 it is possible to derive a single unitary relationship between the image sharpness metric value and unsharp mask gain. This may be achieved by creating a function relating unsharp-mask gain to the image sharpness metric value based on the interpolation of the point-wise median of the graphs for a particular sharpness metric value calculation method. Typically, the unitary relationship would be represented by a line positioned approximately in the centre of the lines in Figure 11.

To adjust the sharpness of a subject image, the sharpness metric value is measured for the subject image and its corresponding unsharp-mask gain is determined using the unitary relationship between the image sharpness metric value and unsharp mask gain obtained from e.g. Figure 11. The unitary relationship itself is then calibrated so that the subject image's sharpness metric value corresponds to a zero value of unsharp-mask gain. In other words the unitary relationship is shifted relative to the axes of Figure 11 such that the subject image's sharpness metric value corresponds to a zero value of unsharp-mask gain. The required unsharp-mask gain can then be found from the calibrated relationship, using the desired image sharpness metric value as the input.

**Claims**

1. A method of quantifying the sharpness of a digital image, comprising the steps of:

    identifying a plurality of edges in a digital image; and,
    calculating an image sharpness metric value representative of the sharpness of the digital image based on the identified edges.

2. A method according to claim 1, in which the step of calculating an image sharpness metric value further comprises the step of determining an aggregate edge profile representative of said image, from said identified edges; and, calculating the image sharpness metric value based on the aggregate edge profile.

3. A method according to claim 1, in which the step of calculating an image sharpness metric value representative of the sharpness of the digital image further comprises the step of calculating a sharpness metric value for each of the identified edges and calculating the image sharpness metric value based on the calculated sharpness metric values for each of the identified edges

4. A method according to claim 1, in which the step of identifying a plurality of edges is performed using an edge detection operator on the digital image.

5. A method according to claim 4, in which the step of identifying a plurality of edges is performed using an edge detection operator on a low-resolution version of the digital image.

6. A method according to claim 4, in which the edge detection operator is selected from the group consisting of a Sobel edge detector, a Canny edge detector and a Prewitt edge detector.

7. A method according to claim 4, in which prior to the operation of the edge detection operator, the image is split up into a number of blocks, and a threshold value for an edge is set for each block.

8. A method according to claim 7, in which the threshold value for each block is equal to the RMS value within the respective block.

9. A method according to claim 5, in which the positions of the identified edges detected in the low-resolution image are interpolated to identify corresponding edges in a full-resolution version of the image.

10. A method according to claim 9, further comprising the steps of:

  extracting edge profiles corresponding to the edges in the full-resolution version of the image;
  testing said extracted edge profiles for compliance with one or more criteria; and, rejecting each one of said tested edge profiles that does not satisfy said one or more criteria.

11. A method according to claim 10, in which the one or more criteria include whether or not the profile neighbourhood is within defined numeric limits, whether or not the profile includes any large negative slopes and whether or not the profile is within a predetermined range on at least one side of the edge.

12. A method according to claim 10, comprising the step of storing the extracted edge profiles that satisfy the one or more criteria and in which an aggregate edge profile for the image is determined in dependence on said stored edge profiles.

13. A method according to claim 2, in which a method by which the aggregate edge profile is determined in dependence on the stored edge profiles is selected from the group consisting of taking the median of the stored edge profiles, taking a mean of the stored edge profiles and calculating a weighted sum of stored edge profiles.

14. A method according to claim 3, in which the image sharpness metric value is defined as an average of the sharpness metric values obtained from each of the identified edges.

15. A method according to claim 12, in which the sharpness metric value obtained from each of the extracted edge profiles is defined as follows:

$$\text{Sharpness metric value} = \tfrac{1}{N} \sum_{k=1}^{N} (x_{c-1+k} - x_{c-k}) W_k$$

  in which $N$ is the number of gradient values to measure;
  $c$ is a co-ordinate representing the centre of the edge profile;
  $k$ is the profile sample offset;
  $x_k$ is the profile sample value at a position defined by $k$; and,
  where $W_k$ is a weighting vector to weight contributions to the sharpness metric value in dependence on closeness of a gradient to the centre of the edge profile.

16. A method according to claim 2, in which the image sharpness metric value is defined as follows:

$$\text{Sharpness metric value} = \frac{1}{N} \sum_{k=1}^{N} (x_{c-1+k} - x_{c-k})W_k$$

in which $N$ is the number of gradients values to measure;
$c$ is a co-ordinate representing the centre of the aggregate edge profile;
$k$ is the profile sample offset;
$x_k$ is the profile sample value at a position defined by $k$; and,
$W_k$ is a weighting vector which gives greater significance to the gradient measurements the closer they are made to the centre of the aggregate edge profile.

17. A method according to claim 12, in which said extracted edge profiles are normalised prior to storing.

18. A method of controlling the sharpness of an image, comprising the steps of:

quantifying the sharpness of the image in accordance with the method of claim 1, to provide an image sharpness metric value representative of the image sharpness; adjusting the aggressiveness of a digital sharpening algorithm in dependence on a calibrated relationship between the aggressiveness of the digital sharpening algorithm and the image sharpness metric value.

19. A method according to claim 18, in which the calibrated relationship between the aggressiveness of a digital sharpening algorithm and the image sharpness metric value is generated by:

(a) filtering each image in a training set of images using the digital sharpening algorithm across a range of values for aggressiveness of the digital sharpening algorithm;
(b) for each value of aggressiveness for each of the images in the training set, quantifying the sharpness of the sharpened image in accordance with the method of claim 1;
(c) determining the relationship between the aggressiveness of the digital sharpening algorithm and the image sharpness metric value in dependence on results of step (b).

20. A method according to claim 18, in which the aggressiveness of the digital sharpening algorithm is defined by the gain of an unsharp-mask filter.

21. A processor adapted to receive as an input a digital image and provide as an output an image sharpness metric value representative of the sharpness of the image, the processor being adapted to execute the method steps of claim 1.

22. Computer program code means, which when run on a computer cause said computer to execute the method steps of claim 1.

IDENTIFY EDGES
IN IMAGE — 2

4

CREATE
AGGREGATE
PROFILE — 6

DETERMINE/CALCULATE
METRIC — 7

**FIG. 1**

SOURCE
IMAGE — 8

COMPUTE
DECIMATION
FACTOR — 10

DECIMATE
IMAGE — 12

FIND
EDGES — 14

SET ANALYSIS
BLOCK CENTRES — 16

BLOCK CENTRES
& BLOCK SIZE — 18

**FIG. 2**

**FIG. 3**

**FIG. 4**

*FIG. 5*

**FIG. 6**

EP 1 411 469 A2

**FIG. 7**

EP 1 411 469 A2

SELECTED PROFILES

## FIG. 8

AGGREGATE PROFILE

## FIG. 9

**FIG. 10**

FIG. 11

**FIG. 12**

EP 1 411 469 A2

**FIG. 13**